(19) Europäisches Patentamt
European Patent Office
Office européen des brevets

(11) Veröffentlichungsnummer: **0 177 961**
**B1**

(12) # EUROPÄISCHE PATENTSCHRIFT

(45) Veröffentlichungstag der Patentschrift: **13.01.88**

(51) Int. Cl.⁴: **C 08 L 23/10**, C 08 K 5/34

(21) Anmeldenummer: **85112866.0**

(22) Anmeldetag: **10.10.85**

(54) **Polypropylen, kristalline Copolymere von Propylen oder Mischungen von Polypropylen mit anderen Polyolefinen mit hoher Schlagzähigkeit und Spannungsrissbeständigkeit.**

(30) Priorität: **11.10.84 AT 3229/84**

(43) Veröffentlichungstag der Anmeldung: **16.04.86 Patentblatt 86/16**

(45) Bekanntmachung des Hinweises auf die Patenterteilung: **13.01.88 Patentblatt 88/2**

(84) Benannte Vertragsstaaten: **BE CH DE FR GB IT LI LU NL SE**

(56) Entgegenhaltungen:
**DE-B-1 188 279**

**PATENTS ABSTRACTS OF JAPAN, Band 7, Nr. 14 (C-146) 1159, 20. Januar 1983**

(73) Patentinhaber: **Petrochemie Danubia Gesellschaft m.b.H., Danubiastrasse 21-25, A-2323 Schwechat-Mannswörth (AT)**

(72) Erfinder: **Kathan, Wolfgang, Dr.- Ing., Boschweg 3, A-4020 Linz (AT)**

(74) Vertreter: **Kinzebach, Werner, Dr., Patentanwälte Reitstötter, Kinzebach und Partner Sternwartstrasse 4 Postfach 86 06 49, D-8000 München 86 (DE)**

**EP 0 177 961 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polypropylen, dessen kristalline Copolymere bzw. eine Mischung desselben mit anderen Polyolefinen mit überwiegendem Polypropylenanteil, das sich durch hohe Schlagzähigkeit und Spannungsrißbeständigkeit auszeichnet, ein Verfahren zu dessen Herstellung und dessen Verwendung, insbesondere zur Herstellung von Formkörpern durch Verformung in der Schmelze.

Bei Verarbeitung von Polypropylen durch Verformung in schmelzflüssigem Zustand und anschließendes Erstarrenlassen durch Abkühlung, sei es durch Spritzguß oder Extrusion, ist es wünschenswert, die Keimzahl zu erhöhen, um die Kristallisation zu beschleunigen, sodaß bereits bei höheren Temperaturen eine raschere und gleichmäßige Kristallbildung erzielt werden kann. Dies führt zu einem rascheren Erstarren des Formkörpers und zu kürzeren Formstandzeiten bzw. Prozeßzyklen.

Ein Mittel, um dies zu erreichen, ist der Zusatz von sog. heterogenen Nukleierungsmitteln, das sind Substanzen, die in der Polymerschmelze unlöslich sind und Kristallisationskeime darstellen. Siehe F. L. Binsbergen, Polymer 11, (1970), Nr. 5, 253 - 267. Derartige Nukleierungsmittel sind u. a. Aluminiumsalze und Natriumsalze von verschiedenen organischen Säuren, Salze von zweiwertigen Metallen und verschiedene organische Pigmente vtie Kupfer-Phthalocyanine, sowie Anthrachinonpigmente und Chinacridone.

Aus der DE-PS-1 188 279 gelit weiters hervor, daß durch Zusatz von 0,0005 bis 0,005 Prozent-Masse der gamma-Phase des linearen trans-Chinacridons der Formel

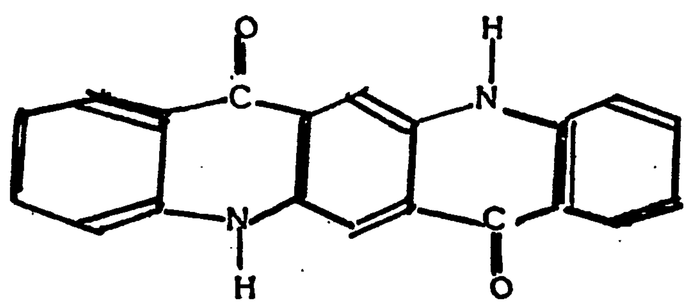

zu Polypropylen oder dessen Mischungen mit einem Äthylen-propylen- oder Äthylen-butylen-Mischpolymeren die Zähigkeit derselben um 30 % und mehr verbessert wird, wobei der Effekt durch Zusatz von mehr als 0,005 % Masse, das sind $5 \times 10^{-3}$ Masseteile pro 100 Masseteile der Mischung, keine weitere Erhöhung mehr erfährt.

Es ist ferner bekannt, daß isotaktisches Polypropylen in verschiedenen Modifikationen kristallisieren kann. Neben der üblicherweise bei Kristallisation einer Polypropylen-Schmelze auftretenden monoklinen alpha-Modifikation gibt es auch eine hexagonale odcr pseudohexagonale, die sog. beta-Modifikation, die trikline gamma-Modifikation und die sog. smektische Modifikation, die vor allem beim raschen Abkühlen von Schmelzen entsteht.

Die hexagonale oder pseudohexagonale beta-Modifikation bildet sich dabei nur unter bestimmten Bedingungen in gewissem Ausmaß, nämlich:

a) Kristallisation einer Schmelze bei 100 - 130° C,

b) Kristallisation einer orientierten Schmelze,

c) Kristallisation einer Schmelze unter anwesenheit bestimmter Nukleiermittel.

(K. H. Moos und B. Tilger, Angewandte Makromolekulare Chemie, 94 (1981), 213-255).

Ein solches Nukleiermittel ist z. B. die oben bereits erwähnte gamma-Phase des linearen trans-Chinacridons, siehe H.J. Leugering, Makromoolekulare Chemie, 109 (1967), 204 ff und K. H. Moos und B. Tilger, Angewandte Makromolekulare Chemie, 94 (1981), 213 - 255).

Eigene Untersuchungen zeigten, daß Polypropylene, die diese gamma-Phase des linearen trans-Chinacridons in Mengen von $3 \times 10^{-3}$ bis $1 \times 10^{-6}$ Masse-Teilen pro 100 Masse-Teilen Polypropylen enthalten, beta-Kristallitanteile von 40 bis rund 60 % aufwiesen. Diese beta-Anteile wurden an Untersuchungen im Differential-Scanning-Calorimeter und Bestimmung des Verhältnisses der peak-Flächen (beta-Fläche) : (alpha-Fläche + beta-Fläche) bestimmt.

Die beta-Modifikation von Polypropylen besitzt mehrere interessante Eigenschaften, wobei die Verbesserung der Schlagzähigkeit des Polypropylens am bemerkenswertesten ist. Gemäß J. Brandrup u. E.H. Immergut, Polymer Handbook, 2nd Edition (1975); III-10 besitzt sie eine Dichte von 0,922 $g/cm^3$, im Vergleich von jener von 0,938 $g/cm^3$ der alpha-Form und hat eine um etwa 30 % höhere Sphärolithwachstumsgeschwindigkeit als die alpha-Modifikation. Sowohl diese, als auch die niedrige Dichte sind wünschenswerte Eigenschaften für Polypropylen, da dieses umso weniger schwindet, je niedriger seine Dichte ist.

Der vorliegenden Erfindung liegt die Aufgabe zugrunde, Polypropylen in technischem Maßstab zugänglich zu machen, das nach Auskristallisieren aus der Schmelze einen möglichst hohen Anteil an der beta-Modifikation, möglichst über 70 % und eine niedrige Dichte, z. B. unter 0,905 $g/cm^3$ besitzt, da zu erwarten war, daß derartige Produkte sehr günstige physikalische und verarbeitungstechinische Eigenschaften besitzen müssen.

Überraschenderweise wurde nun gefunden, daß es möglich ist, diese Aufgabe zu lösen, wenn dem Polypropylen bzw. dessen kristallinen Copolymeren oder Mischungen mit anderen Polyolefinen mit

überwiegendem Polypropylenanteil geringe Mengen eines Mischkristalls von Chino-(2,3-b)-acridin-7,14-dion-5,12-dihydro (lineares trans-Chinacridon) mit Chino-(2,3-b)-acridin-6,7,13,14(5H,12H)tetron (Chinacridonchinon) zugesetzt werden. Das hohe Vermögen dieses Mischkristalls, die Kristallisation des Polypropylens in der beta-Form zu bewirken, ist deshalb überraschend, da derartig hohe beta-Anteile mit der gamma-Phase des linearen trans-Chinacridons nie erreichit wurden und die alpha- und beta-Phase des linearen trans-Chinacridons zwar auch Nukleiermittel sind, jedoch eine Kristallisation des Polypropylens in der alpha-Kristallform bewirken.

Gegenstand der vorliegenden Erfindung sind demnach Polypropylen, kristalline Copolymere oder Mischungen desselben mit anderen Polyolefinen mit überwiegendem Polypropylenanteil mit hoher Schlagzähigkeit und Spannungsrißbeständigkeit, gekennzeichnet durch einen Gehalt an Kristalliten mit hexagonaler oder pseudohexagonaler Kristalltracht von über 65 %, gemessen mittels Differential-Scanning-Calorimeter, und einer Dichte nach DIN 53479 von unter 0,905 g/cm$^3$ sowie durch einen Gehalt an 5 x $10^{-4}$ bis 5 x $10^{-8}$ Masseteilen eines Mischkristalls von Chino-(2,3-b)-acridin-7,14-dion-5,12-dihydro mit Chino-(2,3-b)-acridin-6,7,13,14(5H,12H)tetron pro 100 Masseteilen der Gesamtmischung, die außerdem übliche Stabilisatoren, Lichtschutzmittel und/oder andere übliche Zusätze enthält.

Die erfindungsgemäß eingesetzten Mischkristalle des linearen trans-Chinacridons mit Chinacridon-chinon unterscheiden sich im Röntgendiffraktogramm von der gamma-Phase des linearen trans-Chinacridons dadurch, daß sie die starken Linien bei den Gitterabständen von 13,58, 6,41, 4,33 und 3,37 Å und auch die mittelstarken Linien bei 6,70, 5,24 und 3,74 Å nicht zeigen. Starke Linien im Diffraktogramm finden sich vielmehr etwa im Bereich der Gitterabstände von 10,1-10,5 Å, bei 3,5-3,6 Å, 3,45-3,5 Å sowie bei etwa 3,3 Å.

Besonderes bevorzugt ist der Zusatz des erfindungsgemäß eingesetzten Mischkristalls in einer Menge, daß ein Gehalt an 5 x $10^{-4}$ bis 5 x $10^{-7}$ Masseteilen pro 100 Masseteilen der Polypropylenmischung erzielt wird.

Bei diesen Zusätzen resultieren Gehalte an der beta-Kristallform von mehr als 70 %, ja sogar über 80 % bei gleichzeitigem Absinken der Dichte auf Werte um 0,904 g/cm$^3$.

Der hohe beta-Modifikations-Anteil der erfindungsgemäßen Polypropylene bzw. Mischungen schlägt sich auch in den physikalischen Eigenschaften, z. B. gemessen an gepreßten Platten, nieder. Bemerkenswert ist gegenüber Polypropylen ohne den erfindungsgemäßen Gehalt an dem Mischkristall eine Erniedrigung der Streckspannung und der Reißdehnung gemäß DIN 53455 bei gleichzeitiger Erhöhung der Reißfertigkeit, eine Erniedrigung der 3,5 % Biegespannung nach DIN 53452 und eine Erhöhung der Schlagzähigkeit nach DIN 53453 und DIN 53753 sowohl bei 23°C als auch bei -20°C. Polypropylen, das die gleiche Menge der gamma-Phase des linearen trans-Chinacridons enthält, zeigt im Gegensatz dazu gegenüber unbehandeltem Polypropylen eine Erhöhung der Streckspannung, der Reißdehnung und der 3,5 % Biegespannung und liegt in den Schlagzähigkeits- und Reißfestigkeitswerten zwischen unbehandeltem Polypropylen und dem erfindungsgemäßen Material. Das bedeutet, daß sich das erfindungsgemäße Material durch erhöhte Festigkeit bei gleichzeitiger erhöhter Duktilität auszeichnet.

Die erfindungsgemäß eingesetzten Mischkristalle sind im Handel als Chinacridonpigmente erhältlich.

Die Herstellung der erfindungsgemäßen Mischungen erfolgt durch intensives Mischen der Bestandteile, wobei der Mischkristall als solcher oder in Form eines Masterbatches zugesetzt werden kann, und anschließende Verarbeitung in der Schmelze z. B. durch Spritzguß oder Extrusion. Es kann dabei z. B. in Granulat übergeführt werden, das dann in beliebiger Weise weiterverarbeitet werden kann. Die Massetemperatur bei der Verformung zum Zwecke der Granulierung wird dabei bei den üblichen Werten, z. B. etwa 200-220°C, gehalten.

Die erfindungsgemäßen Mischungen zeichnen sich durch einen niedrigeren Schwund sowie durch eine hohe Schlagzähigkeit und Spannungsrißbeständigkeit aus. Der Schmelz- bzw. Umwandlungspunkt liegt tiefer als bei herkömrnlichen Polypropylenen ca. bei 145 - 150°C; sie zeigen eine raschere Sphärolithwachstumsgeschwindigkeit als jene herkömmlichen Polypropylene, die in der alpha-Modifikation kristallisiert sind, was sich verarbeitungstechnisch günstig auswirkt.

Eine Umlagerung in die alpha-Modifikation findet statt, wenn das Material bei 150°C getempert wird.

Der hohe beta-Modifikations-Anteil wirkt sich in einer Trübung des Polypropylens aus. Bei Umlagerung in die alpha-Modifikation kann man dann vorteilhafterweise eine sehr hohe Klarsichtigkeit erzielen.

Das erfindungsgemäße Material ist auf Grund seiner mechanischen und verarbeitungstechnischen Vorzüge für eine Reihe von Verarbeitungsmethoden mit Vorteil einzusetzen. Unter diesen ist besonders die Extrusion, insbesondere auch zu Folien, Bändchen und Fasern zu nennen, wobei bei Bändchen auch eine Verminderung der Spleißneigung bei erhöhter mechanischer Festigkeit festzustellen ist. Besondere Vorteile sind auch beim Hohlkörperblasen sowie im Spritzguß feststellbar, wobei die guten Eigenschaften ganz besonders bei der Herstellung sehr großer Gegenstände zum Tragen kommen, die bei herkömmlichen Materialien wegen der Verzugsneigung und Spannungsrißbildung sehr schwer zu fertigen sind.

Die Mischungen können natürlich auch die üblichen stabilisierenden Zusätze enthalten, ohne daß der Effekt gestört wird.

Die nachfolgenden Beispiele erläutern die Erfindung. Bei allen Untersuchungen wurden Mischungen, die in gleicher Weise erhalten wurden, jedoch anstelle des erfindungsgemäß eingesetzten Mischkristalls die gamma-Phase des linearen trans-Chinacridons enthielten, als Vergleichsprobe mitgeführt:

**Beispie 1:**

Polypropylenpulver mit einem Schmelzindex (230° C/2,16 kg) von etwa 0,2 g/10 Minuten mit einem Gehalt an 0,1 % Masse Calciumstearat, 0,05 % Masse Tetrakis-(2,4-di-tert.-butylphenyl)-4,4'-biphenylylen-diphosphonit, 0,1 % Masse Pentaerithrityl-tetrakis-3-(3,5-di-tert-butyl-4-hydroxyphenyl)-propionat und 0,2 % Masse Thiodipropionsäureester wurden mit Mengen von 5 x $10^{-4}$ bis 5 $10^{-8}$ Masseteilen eines Mischkristalls von linearem trans-Chinacridon und Chinacridonchinon pro 100 Masse-Teilen der Gesamtmischung versetzt und im Intensivmischer gemischt. Anschließend wurde die Mischung in einem Einschneckenextruder bei 210° C Massetemperatur extrudiert und granuliert. Die Mischungen mit sehr geringem Mischkristallanteil wurden wahlweise auch durch Verdünnung höher konzentrierter Mischungen mit dem gleichen Polypropylen hergestellt.

Es wurden zwei verschiedene Mischkristalle eingesetzt, die folgende Röntgendiffraktogramme zeigten:

| Mischkristall 1<br>d in Å | Mischristall 2<br>d in Å |
|---|---|
| 10,46 (S) | 10,16(S) |
| 6,28 | 6,24 |
| 4,80 | 5,04 |
| 4,13 | 4,72 |
| 3,98 | 4,58 |
| 3,65 (S) | 4,13 |
| 3,48 (S) | 4,00 |
| 3,30 (S) | 3,63 (S) |
| 2,88 | 3,47 (S) |
| 2,11 | 3,28 (S) |
| 2,09 | 2,84 |
| | 2,17 |
| | 2,11 |
| | 2,09 |
| | 2,08 |
| | 2,06 |

(S)...starke Bande

Aus den so erhaltenen Mischungen wurden Preßplatten 20 x 20 x 0,25 mm durch Aufschmelzen und Verpressen bei ca. 220° C hergestellt. Diese wurden in Scheibchen von etwa 5 mm Durchmesser geschnitten und der Bestimmung des beta-Anteils im Differential-Scanning-Calorimeter unterworfen.

Dazu wurde an den Prüfkörpern nach dem 1. Aufheizen auf 220°C jeweils eine Abkühlkurve und eine 2. Aufheizkurve im Temperaturbereich von 23-220°C im DSC-2C-Gerät der Fa. Perkin Elmer aufgenommen. Aufheiz- und Abkühlraten betrugen 20K/Minute. Die angegebenen beta-Anteile wurden aus dem Verhältnis (beta-Fläche) : (alpha-Fläche + beta-Fläche) errechnet.

Die Werte sind in der nachfolgenden Tabelle 1 angegeben, wobei die Vergleichsmischung, die die gamma-Phase des linearen trans-Chinacridons enthält, mit "Vergleich" bezeichnet wird.

**Tabelle 1**

| Masseanteil pro 100 Teilen Mischung | Nukleiermittel | Kristallisations-temperatur °C | β-Flächenanteil (Flächen %) |
|---|---|---|---|
| $5 \times 10^{-4}$ | Mischkristall 1 | 118,1 | 83,2 |
| | Mischkristall 2 | 120,3 | 80,4 |
| | Vergleich | 119,3 | 41,7 |
| $5 \times 10^{-5}$ | Mischkristall 1 | 117,0 | 84,5 |
| | Mischkristall 2 | 118,9 | 82,3 |
| | Vergleich | 117,1 | 54,5 |
| $5 \times 10^{-6}$ | Mischkristall 1 | 115,7 | 80,9 |
| | Mischkristall 2 | 116,8 | 83,2 |
| | Vergleich | 114,8 | 69,8 |
| $5 \times 10^{-7}$ | Mischkristall 1 | 113,9 | 79,6 |
| | Mischkristall 2 | 114,7 | 77,8 |
| | Vergleich | 111,3 | 68,5 |
| $5 \times 10^{-8}$ | Mischkristall 1 | 111,5 | 73,1 |
| | Mischkristall 2 | 112,1 | 69,6 |
| | Vergleich | 107,5 | 56,7 |

Ferner wurden als weitere Prüfkörper Preßplatten mit den Abmessungen von 136 x 136 x 2 mm hergestellt. Dazu wurde das Material bei 200°C in einem Preßrahmen aufgeschmolzen, 2 Minuten lang mit dem Preßrahmen in der Presse gepreßt und mit einer mittleren Abkühlrate von ca. 10K/Min auf Zimmertemperatur abgekühlt. Aus daraus ausgestanzten Prüfkörpern von 30 30 x 2 mm wurde nach dem Auftriebsverfahren nach DIN 53479 die Dichte bestimmt. Die Werte für den Masseanteil $5 \times 10^{-4}$ wurden wegen des Pigmentgehaltes korrigiert.

**Tabelle 2**

| Masseanteil | Nukleiermittel | Dichte g/cm³ |
|---|---|---|
| $5 \times 10^{-4}$ | Mischkristall 1 | 0,9038 |
| | Mischkristall 2 | 0,9046 |
| | Vergleich | 0,9118 |
| $5 \times 10^{-5}$ | Mischkristall 1 | 0,9039 |
| | Mischkristall 2 | 0,9043 |
| | Vergleich | 0,9103 |
| $5 \times 10^{-6}$ | Mischkristall 1 | 0,9037 |
| | Mischkristall 2 | 0,9041 |
| | Vergleich | 0,9065 |
| $5 \times 10^{-7}$ | Mischkristall 1 | 0,9036 |
| | Mischkristall 2 | 0,9039 |
| | Vergleich | 0,9055 |
| $5 \times 10^{-8}$ | Mischkristall 1 | 0,9038 |
| | Mischkristall 2 | 0,9039 |
| | Vergleich | 0,9053 |

Bei den Vergleichsproben wird also eine Dichte unter 0,9050 auch bei beta-Anteilen von 68 bzw. 69 % ($5 \times 10^{-7}$) nihcht festgestellt.

Mit den Mischungen mit einem Gehalt an Nukleiermittel von $5 \times 10^{-4}$ Masse-Teilen pro 100 Masse-Teilen Mischung wurden die mechanischen Werte bestimmt. Dazu dienten Preßplatten 240 x 240 x 3 bzw. 4 mm als Prüfkörper, die unter denselben Bedingungen wie oben hergestellt wurden.

Die Werte sind in nachfolgender Tabelle 3 Zusammengefaßt.

**Tabelle 3**

| gepreßte PK | | | kein Nukleiermittel | Vergleich | Mischkristall 1 | |
|---|---|---|---|---|---|---|
| MFI (230/2,16) | | (g/10 min) | 0,30 | 0,29 | 0,29 | |
| Dichte der Preßplatte 240 x 240 x 4 mm | | ($g/cm^3$) | 0,9059 | 0,9081 | 0,9009 | DIN 53479 |
| Streckspannung | | ($N/mm^2$) | 31,0 ± 0,2 | 32,1 ± 0,3 | 27,5 ± 0,6 | DIN 53455 |
| Streckdehnung | | (%) | 11,5 ± 0,7 | 9,0 ± 0,7 | 8,5 ± 0,6 | DIN 53455 |
| Reißfestigkeit | | ($N/mm^2$) | 39,8 ± 2,5 | 43,5 ± 1,9 | 46,1 ± 0,7 | DIN 53455 |
| Reißdehnung | | (%) | 744,4 ± 37,6 | 761,7 ± 39,2 | 652,7 ± 12,9 | DIN53455 |
| 3,5 % -Biegespannung | | ($N/mm^2$) | 30,7 ± 0,7 | 34,3 ± 0,6 | 29,8 ± 0,7 | DIN 53452 |
| Biegefestigkeit | | ($N/mm^2$) | 37,7 ± 0,4 | 41,7 ± 0,3 | 36,1 ± 0,6 | DIN 53452 |
| Kerbschlagzähigkeit | + 23° 2) | ($mJ/mm^2$) | 5,7 ± 0,3 | 8,3 ± 0,7 | 13,4 ± 1,8 | DIN 53453 |
| " | -20° 2) | ($mJ/mm^2$) | 1,5 ± 0,2 | 1,6 ± 0,2 | 2,1 ± 0,2 | DIN 53453 |
| Schlagzähigkeit-DV | +23° 2) | ($mJ/mm^2$) | 14,6 ± 0,6 | 21,0 ± 1,4 | 23,6 ± 1,75 1) | DIN 53753 |
| " | -20° 2) | ($mJ/mm^2$) | 2,6 ± 0,2 | 2,5 ± 0,4 | 3,5 ± 0,4 | DIN 53753 |
| Kugeldruckhärte $H_{30}$ | | ($N/mm^2$) | 69,6 ± 0,8 | 77,0 ± 3 | 63,9 ± 2,2 | DIN 53456 |
| Vicat B | | (°C) | 90 | 100 | 92 | |

1) Hammer 1J    2) Hammer 0,5J

**Beispiel 2:**

Wie in Beispiel 1 beschrieben wurden Mischungen mit Polypropylen eines Schmelzindex (230° C/2,16 kg) von 5 g/10 Minuten und 18 g/10 Minuten hergestellt, die als Stabilisatoren 0,1 % Masse Calciumstearat, 0,05 % Masse 2,6-Di-tert-butyl-4-methylphenol und 0,05 % Masse Pentaerithrityl-tetrakis-3-(3,5-di-tert-butyl-4-hydroxyphenyl)-propionat enthielten. Den Proben wurden x $10^{-4}$ Masseteile des im Beispiel 1 angegebenen Mischkristalls 1 pro 100 Masseteilen Mischung zugesetzt und wie in Beispiel 1 angegeben der beta-Anteilbestimmung im DSC unterworfen. Auch hier wurde mit gleich hergestellten Mischungen, die die gleiche Menge der gamma-Phase des linearen trans-Chinacridons enthielten, verglichen.

**Tabelle 4**

| Nukleiermittel $5 \times 10^{-4}$ M.T./100 T. | Polypropylen MFI | beta-Anteil (Flächen%) |
|---|---|---|
| Mischkristall 1 | 5 g/10 min | 84,5 |
| Vergleich | 5 g/10 min | 48,3 |
| Mischkristall 1 | 18 g/10 min | 80,2 |
| Vergleich | 18 g/10 min | 38,2 |

**Patentansprüche**

1. Polypropylen, kristalline Copolymere oder Mischungen desselben mit anderen Polyolefinen mit überwiegendem Polypropylenanteil, mit hoher Schlagzähigkeit und Spannungsrißbeständigkeit, gekennzeichnet durch einen Gehalt an Kristalliten mit hexagonaler oder pseudohexagonaler Kristalltracht von über 65 % gemessen mittels Differential-Scanning-Calorimeter, und einer Dichte nach DIN 53479 von unter 0,905 $g/cm^3$ sowie durch einen Gehalt an $5 \times 10^{-4}$ bis $5 \times 10^{-8}$ Masseteilen eines Mischkristalls von Chino-(2,3 b)-acridin-7,14-dion-5,12-dihydro mit Chino-(2,3-b)-acridin-6,7,13,14-(5H,12H)tetron pro 100 Masseteile der Gesamtmischung, wobei außerdem übliche Stabilisatoren, Lichtschutzmittel und/oder andere übliche Zusätze vorliegen können.

2. Polypropylen nach Anspruch 1, gekennzeichnet durch einen Gehalt an dem Mischkristall von $5 \times 10^{-4}$ bis $5 \times 10^{-7}$ Masseteilen pro 100 Masseteilen Gesamtmischung und einen Anteil an hexagonaler oder pseudohexagonaler Kristalltracht von über 70 %.

3. Verfahren zur Herstellung des Polypropylens gemäß den Patentansprüchen 1 und 2, dadurch gekennzeichnet, daß festphasiges Polypropylen mit den üblichen Stabilisatoren und/oder Lichtschutzmitteln

und/oder übrigen Zusätzen sowie mit 5 x $10^{-4}$ bis 5 x $10^{-8}$ Masse-Teilen pro 100 Massenteilen Gesamtmischung eines Mischkristalls von Chino-(2,3-b)-acridin-7,14-dion-5,12-dihydro mit Chino-(2,3-b)-acridin-6,7,13,14(5H,12H)-tetron intensiv gemischt, anschließend in den geschmolzenen Zustand übergeführt, beliebig verformt und abkühlen gelassen wird.

4. Verwendung des Polypropylens gemäß den Ansprüchen 1 und 2 zur Verarbeitung in der Schmelze zwecks Herstellung von schwindungsarmen Formkörpern mit hoher Schlagzähigkeit und Spannungsrißbeständigkeit.

**Claims**

1. Polypropylene, crystalline copolymers or mixtures thereof with other polyolefins with a predominant proportion of polypropylene, of high impact strength and stress cracking resistance, characterized by a content of more than 65 %, measured by means of a differential scanning calorimeter, of crystallites having a hexagonal or pseudohexagonal crystal habit, a density of less than 0.905 g/$cm^3$ according to DIN 53479 and by a content of 5 x $10^{-4}$ to 5 x $10^{-8}$ parts by mass of a mixed crystal of 5,12-dihydroquino(2,3-b)acridine-7,14-dione with quino(2,3-b)acridine-6,7,13,14-(5H,12H)-tetrone per 100 parts by mass of the total mixture, it also being possible for conventional stabilizers, light stabilizers and/of other conventional additives to be prasent.

2. Polypropylene according to Claim 1, characterized by a content of 5 x $10^{-4}$ to 5 x $10^{-7}$ parts by mass of the mixed crystal per 100 parts by mass of the total mixture and a proportion of more than 70 % of hexagonal or pseudohexagonal crystal habit.

3. Process for preparing the polypropylene according to Patent Claims 1 and 2, characterized in that solid-phase polypropylene is intensively mixed with the conventional stabilizers and/or light stabilizers and/or other additives and with 5 x $10^{-4}$ to 5 x $10^{-8}$ parts by mass per 100 parts by mass of the total mixture of a mixed crystal of 5,12-dihydro-quino(2,3-b)acridine-7,14-dione with quino(2,3-b)acridine-6,7,13,14-(5H,12H)-tetrone, is then converted into the molten state, shaped as desired and allowed to cool.

4. Use of the polypropylene according to Claims 1 and 2 for processing in the melt for the purpose of producing low-shrinkage mouldings of high impact strength and stress cracking resistance.

**Revendications**

1. Polypropylène, copolymères ou mélanges cristallins de celui-ci avec d'autres polypléfines à proportion principale de polypropylène ayant une haute résistance au choc et résistance à la fissure sous tension, caractérisés en ce qu'ils ont une teneur en cristallites de faciès hexagonal ou pseudohexagonal supérieure a 65%, mesurée au moyen du calorimètre différentiel à balayage, et une tensité selon DIN 53479 inférieure à 0,905 g/$cm^3$ ainsi qu'une teneur de 5 x $10^{-4}$ à 5 x $10^{-8}$ partie en masse d'un cristal mixte ou solution solide acridine-6,7,13,14(5H,12H)tétrone par 100 parties en masse de le composition ou mélange total qui peut, en outre, présenter des stabilisants et agents de protection contre la lumière courants et/ou d'autres additifs courants.

2. Polypropylène selon la revendication 1, caractérisé en ce qu'il a une teneur en cristal mixte défini dans ladite revendication, de 5 x $10^{-4}$ à 5 x $10^{-7}$ partie en masse par 100 parties en masse de la composition totale et une proportion de faciès cristallin hexagonal ou pseudohexagonal supérieure à 70 %.

3. Procéde pour la préparation du polypropylène selon les revendications 1 et 2, caractérisé en ce qu'on mélange intensivement du polypopylène en phase solide avec les stabilisants et/ou agents de protection contre le lumière courants et/ou additifs courants ainsi qu'avec 5 x $10^{-4}$ à 5 x $10^{-8}$ partie en masse, par 100 parties en masse du mélange total, d'un cristal mixte ou solution solide de 5,12-dihydro-quino-(2,3-6)-acridine-7,14-dione avec la quino-(2,3-6)-acridine-6,7,13,14(5H,12H)tétrone, on convertit consécutivement la mélange à l'état fondu, on le soumet au format ou moulage désiré et on le laisse refroidir.

4. Utilisation du polypropylène selon les revendications 1 et 2, pour façonnage dans la masse fondue en vue de fabriquer des pièces moulées à faible retrait et ayant une haute résistance au choc et résistance à la fissure sous tension.